# EUROPÄISCHE PATENTSCHRIFT

(11) **EP 1 596 179 B1**
(45) Veröffentlichungstag und Bekanntmachung des Hinweises auf die Patenterteilung: **01.05.2013**
(21) Anmeldenummer: 05010189.8
(22) Anmeldetag: 11.05.2005
(51) Int. Cl.: G01M 17/06, G01M 13/02

(54) **Fahrzeugfunktionsprüfstand**
Vehicle test bench
Banc d'essai de véhicule

(30) Priorität: 11.05.2004 DE 102004023730; 22.12.2004 DE 102004063041
(43) Veröffentlichungstag der Anmeldung: 16.11.2005
(73) Patentinhaber: Dürr Assembly Products GmbH, 66346 Püttlingen (DE)
(72) Erfinder: Durant, Pascal, 57990 Hundling (FR); Greff, Uwe, 66271 Kleinblittersdorf (DE); Hell, Heiko, 66606 St. Wendel (DE); Pozzi, Klaus, 66346 Püttlingen (DE); Schenk, Jan, 66346 Püttlingen (DE); Tentrup, Thomas, Dr., 66663 Merzig-Mechern (DE); Müller, Rainer, Dr., 66292 Riegelsberg (DE)
(74) Vertreter: Wieske, Thilo

(56) Entgegenhaltungen:
- EP-A1- 1 491 874
- WO-A-95/30133
- FR-A1- 2 318 411
- US-A- 2 755 554
- US-A- 5 323 644
- US-A- 6 044 696

## Beschreibung

Die Erfindung betrifft einen Fahrzeugfunktionsprüfstand nach dem Oberbegriff der Patentansprüche 1 oder 2.

Fahrzeugfunktionsprüfstände sind bekannt. Sie werden bei Automobilherstellern am Bandende ("End of Line") eingesetzt werden und dienen der Überprüfung des Antriebsstrangs bzw. seiner Komponenten wie z. B. der Bremsanlage des Fahrzeugs.

Üblicherweise sind Fahrzeugfunktionsprüfstände, sogenannte Rollenprüfstände, mit Scheitellaufrollen bzw. Doppellaufrollensätzen versehen, welche verschiedene Nachteile mit sich bringen. Bei der Funktionsprüfung der Fahrzeuge ergibt sich bei Verwendung der Funktionsprüfstände mit Laufrollen in Folge der Reibung bereits vor der Auslieferung des Fahrzeugs an den Endkunden eine Abnutzung der Reifen. Weiterhin ist bei Verwendung von Laufrollen ein fester Reibwert zwischen den Reifen und den Laufrollen vorhanden. Die geringe Bodenfreiheit eines Teils der heutigen Fahrzeuge kann bei Verwendung eines Rollenprüfstandes ein weiteres Problem sein, wenn die Räder des Fahrzeugs jeweils zwischen ein Rollenpaar aufgenommen und auf Grund von Leistungsprüfungen PS-starker Fahrzeug weit einsinken müssen. Dabei kann das Fahrzeug unter Umständen auf den Laufrollen des Fahrzeugfunktionsprüfstandes aufsitzen.

Weitere Nachteile von herkömmlichen Rollenprüfständen sind z.B. eine schlechte oder gar keine Zugänglichkeit des Fahrzeugs von unten während der Prüfung sowie die Gefahr, dass das Fahrzeug bei Leistungsprüfungen des Prüfstand ungewollt verlassen kann (sog. Herausfahren, gerade bei leistungsstarken Allradfahrzeugen). Bei Rollenprüfständen ist zudem eine vollständige Automatisierung, d.h. ein fahrerloser Prüfbetrieb, nur mit extrem hohem technischen Aufwand zu realisieren.

In der nicht vorveröffentlichten Patentanmeldung mit dem Aktenzeichen des Deutschen Patent- und Markenamts DE 10 2004 023 730.1 ist ein Prüfstand beschrieben, bei dem auf einem Grundrahmen für jedes zu prüfende Rad eine Grundplatte vorgesehen ist, wobei zwischen den Grundplatten das zu prüfende Fahrzeug positioniert werden kann, wobei mindestens zwei einander gegenüberliegende Grundplatten in Fahrzeug-x-Richtung beweglich und feststellbar sind, wobei auf jeder Grundplatte eine Trägerplatte in Fahrzeug-y-Richtung beweglich und feststellbar ist, auf der Belastungsvorrichtungen angeordnet sind, wobei die Trägerplatte einerseits "kraftlos" verfahrbar und andererseits über die Belastungsvorrichtungen ein Gegenmoment bzw. eine Gegenkraft, z.B. zur Simulation eines Lenkrückstellmoments, erzeugbar ist und auf das jeweilige Rad bzw. den Radflansch aufbringbar ist.

Durch diese Maßnahmen wird es zum einen möglich, einen Fahrzeugfunktionsprüfstand ohne Laufrollen zu schaffen, und zum anderen, weitere Funktionalitäten von Kraftfahrzeugen, z.B. das beim Lenken durch Querkräfte, Hochkräfte und Radumfangskräfte verursachte Lenkrückslellmoment zu simulieren. Insbesondere sind hohe Antriebs- und Bremsmomente (auch bei Allradfahrzeugen) übertragbar bzw. messbar. Während der Prüfung werden weiterhin die Reifen des Fahrzeugs nicht belastet, weil diese entweder gar nicht montiert sind oder zumindest nicht in Kontakt mit der Laufrolle des Prüfstandes stehen. Das bedingt ebenfalls die freie, simulationstechnische Wahl des Reibwertes durch eine geeignete Ansteuern der Belastungseinheiten des Fahrzeugfunktionsprüfstandes. Außerdem wird das Fahrzeug durch die konstruktiven Gegebenheiten dieses Prüfstandes ausfahrsicher im Prüfstand fest gehalten, was ein unbeabsichtigtes Herausfahren unmöglich macht.

Bei einer Ausbildung dieses Fahrzeugfünktionsprüfstandes können die beweglichen Grundplatten auf je zwei parallelen Schienen, vorzugsweise Leichtlaufschienen, angeordnet sein. Weiterhin können die Trägerplatten auf je zwei parallelen Schienen, vorzugsweise Leichtlaufschienen angeordnet sein.

Zudem können die Belastungsvorrichtungen jeweils einen Motor (z. B. Elektromotor) sowie entsprechende Mittel zum Übertragen der Drehbewegung und des Drehmomentes des Motors auf das jeweilige Rad bzw. den Radflansch des Fahrzeuges. Diese Übertragung der Drehbewegung kann ggf auch mit Adapterscheiben bzw. auf Adapterscheiben sowie mittels Übertragungskupplungen erfolgen.

Mit der Belastungsvorrichtung kann z. B. ein online berechnetes, exakt definiertes Drehmoment bzw. eine online berechnete definierte Kraft, beispielsweise zur Erzeugung oder Simulation eines Lenkrückstellmomentes, aufgebracht werden. "Online berechnet" bedeutet in diesem Zusammenhang, dass die benötigte Kraft mittels eines Fahrzeugmodells zum richtigen Zeitpunkt durch den Prüfstand an die prüfstandsinterne Regelung der Belastungsvorrichtung übertragen wird, von der die Verstellkraft dann entsprechend aufgebracht wird. Das Fahrzeugmodell läuft zeitgleich auf einem übergeordneten Steuerungsrechner "in the Loop" ab, also mit Rückmeldung der vom Prüfstand kommenden Kräfte und Raddrehgeschwindigkeit an den Steuerungsrechner. Dieses Modell kann alternativ oder zusätzlich im zentralen Steuergerät des Fahrzeugs parallel mitlaufen und somit das Modell im übergeordneten Steuerungsrechner ersetzen oder dessen Berechnungsergebnisse verifizieren.

Ebenso können mit der Belastungsvorrichtung andere Momente auf das Fahrzeug übertragen werden, mit denen beispielsweise Fahrwerks- und Antriebsstrangsysteme sowie der komplette Antriebsstrang des Fahrzeugs getestet werden können.

In einem Ausführungsbeispiel können die Mittel zum Übertragen der Drehbewegung des Motors einen übersetzenden Riementrieb umfassen, der die Drehbewegung des Motors auf eine mit dem jeweiligen Rad bzw. dem Radflansch verbundene Welle überträgt. Diese dient insbesondere dazu, um hohe Antriebs- und Bremsmomcnte auf das Fahrzeug zu übertragen, um den Antriebsstrang bzw. alle Teilsysteme, z. B. die Bremsanlage des Fahrzeugs, zu überprüfen.

Hierbei ist es zweckmäßig, dass an / auf der Verbindungswelle eine sinnvoller Weise rotatorische Zusatzmasse zur Erhöhung des Massenträgheitsmomentes vorgesehen wird.

Mittels einer derartigen Zusatzmasse, die ausgewuchtet ist und variabel bestückbar sein kann, kann das Massenträgheitsmoment erhöht werden. Dadurch kann die tatsächliche translatorische Fahrzeugträgheit entsprechend simuliert werden; zumindest kann jedoch die Simulation der "trägen Masse" des Fahrzeugs durch die Belastungseinheiten unterstützt werden. Des weiteren kann durch die Belastungseinheiten eine definierte, elektrisch simulierte zusätzliche Masse erzeugt werden.

Weiterhin können die Mittel zum Übertragen der Drehbewegung des Motors einen Adapter zur Anbindung der Übertragungswelle an die Fahrzeugnabe bzw. den Radflansch aufweisen.

Über diesen Adapter wird die Belastungsvorrichtung mit dem Rad bzw. dem Radflansch des Fahrzeuges verbunden bzw. das Fahrwerk auf Prüflage abgestützt und gehalten.

Der Adapter kann eine Klemm- und Zentriervorrichtung aufweisen und wird über die Radstands- und Spurweitenanpassung der Belastungseinheiten an das Fahrzeug herangeführt und adaptiert.

Mit der Klemm- und Zentriervorrichtung kann die Belastungsvorrichtung mit dem Rad bzw. Radflansch taktzeitoptimiert verbunden werden.

Weiterhin ist beschrieben, dass die Übertragungswelle eine homokinetische Gelenkwelle sein kann.

Über eine derartige, auch als Gleichlaufgelenkwelle (constant velocity joint shaft, CVJS) bezeichnete Welle kann das zu übertragende Drehmoment von dem übersetzenden Riementrieb auf den Adapter und über letzteren an den Radflansch bzw. den Antriebsstrang des Fahrzeugs weitergeleitet werden. Je nach Anforderungen kann an der nicht lenkbaren Achse statt der homokinetischen Gelenkwelle jedoch auch eine mobile Welle-Welle-Verbindung oder eine handelsübliche Kardanwelle mit Längenausgleich (u.a. zur Schwingungsdämpfung) eingesetzt werden, wobei homokinetische Gelenkwellen für die lenkbaren Vorderachsen eingesetzt werden.

Aus der US-PS 6,044,696 ist bereits ein Fahrzeugfunktionsprüfstand bekannt, bei dem an das Fahrzeug Belastungseinheiten an die Räder bzw. Radaufnahmen ankoppelbar sind. Die den lenkbaren Rädern zugeordneten Belastungseinheiten sind dabei so gelagert, dass diese den Lenkbewegungen dieser Räder folgen können. Über die Belastungseinheiten können bestimmte, definierte Belastungsfälle simuliert werden, die im laufenden Fahrbetrieb auftreten können.

Aus der WO 95/30133 A1 ist es bekannt, ein Fahrzeug statisch zu lagern, indem dieses über eine Adapterscheibe an den Radaufnahmen gehalten wird. Es handelt sich bei der hier gezeigten und beschriebenen Vorrichtung allerdings nicht um einen Fahrzeugfunktionsprüfstand, weil keine Drehungen der Fahrzeugräder möglich sind. Damit ist es insbesondere nicht möglich, Fahrsimulationen durchzuführen.

Bei der EP 1 491 874 A1 handelt es sich um ein gegenüber dem Zeitrang dieser Patentanmeldung nicht vorveröffentlichtes Dokument. Dort ist beschrieben, dass bei einem Fahrzeugfunktionsprüfstand eine Belastungseinheit insgesamt den Lenkbewegungen eines Fahrzeugrades folgen kann. Die Bewegungsenergie zur Bewegung der Belastungseinheit mit der Lenkbewegung muss dort von der Lenkung aufgebracht werden.

Aufgabe der vorliegenden Erfindung ist es, Prüfungen im Zusammenhang mit der Lenkung von Fahrzeugen zu verbessern. Dabei soll insbesondere eine Minimierung der von der Lenkung zur Mitführung der Belastungseinrichtungen aufzubringenden Kräfte erreicht werden.

Diese Aufgabe wird nach der vorliegenden Erfindung gemäß Anspruch 1 gelöst, indem die den lenkbaren Rädern des Fahrzeugs zugeordneten Belastungseinrichtungen Lenkbewegungen folgen, indem diese Belastungseinrichtungen mittels Stellelementen bewegbar sind, wobei diese Stellelemente extern mit pneumatischer, hydraulischer oder elektrischer Stellenergie versorgt werden..

Vorteilhaft müssen bei dieser Ausgestaltung die Kräfte zur Mitbewegung der Belastungseinrichtungen insgesamt bzw. der entsprechenden Teile der Belastungseinrichtungen nicht von der Lenkung des zu prüfenden Fahrzeugs selbst aufgebracht werden. Die Ansteuerung der Stellelemente erfolgt vorteilhaft so, dass die Lenkwinkel elektronisch erfasst werden und die Stellelemente entsprechend angesteuert werden. Die elektronische Erfassung kann entweder mittels Absolutwertgebern oder "online" mittels elektronischen Messeinheiten erfasst werden. Die Messeinheiten können im einfachsten Fall kleine Elektromotoren mit hochgenauen Sinus-Kosinusgebern oder ähnliches sein. Dadurch wird die Lenkbelastung des zu prüfenden Fahrzeugs realistischer dargestellt als bei der zuvor beschriebenen Ausführungsform mit der mechanischen Verschiebeeinrichtung.

Die Stellelemente können beispielsweise elektromotorisch, pneumatisch oder auch hydraulisch sein.

Weiterhin kann ein zusätzlicher Elektromotor (beispielsweise ein Standardgetriebemotor) zur Simulation von Lenkrückstellmomenten und Lenkkräften während der Prüfung zum Einsatz kommen. Dieser ist sinnvoll an der Lenkungseinheit der Belastungseinheit befestigt und kann über eine zusätzliche Zahnriemenübersetzung in die Belastungseinheit integriert werden. Die Lenkungseinheit der Belastungseinheit kann beispielsweise über Kreuzschlitten und eine Drehbuchse in ihre einzelnen Freiheitsgrade der Kreisbewegung aufgeteilt sein. Die kleinere Übersetzungszahnscheibe dieser Übersetzungseinheit ist auf dem Elektromotor selbst angebracht. Dessen größere Zahnscheibe ist derart unter der Adaptionseinheit angebracht, dass eine Beaufschlagung des Motors mit einem Drehwunsch mit einem bestimmten Drehmoment ein Stellmoment in die Lenkung des Fahrzeugs einleitet.

Eine weitere Lösung der vorliegenden Erfindung ergibt sich nach Anspruch 2 bei einem Fahrzeugfunktionsprüfstand, bei dem Belastungseinrichtungen kraft- und/oder formschlüssig mit den Rädern, den Radflanschen, den Radnaben bzw. daran angebrachten Adapterscheiben verbindbar sind, wobei Belastungseinrichtungen, die lenkbaren Rädern des Fahrzeugs zugeordnet sind, während des Prüfvorganges bewegbar sind, wobei diese Belastungseinrichtungen unterteilt sind in einen ersten Teil, der bezogen auf den Fahrzeugprüfstand ortsfest positioniert ist und einen weiteren Teil, der bewegbar ist, wobei der erste Teil durch einen Elektromotor gebildet wird und der weitere Teil durch ein Getriebe, wobei die mechanische Verbindung zwischen dem Elektromotor und dem Getriebe derart ist, dass die translatorische Relativbewegung zwischen dem Elektromotor und dem Getriebe unter der Voraussetzung der konstanten und reproduzierbaren Momenten- und Drehzahlübertragung gewährleistet ist. Dabei folgt das Getriebe den Lenkbewegungen, indem das Getriebe mitsamt der kraft- und/oder formschlüssigen Verbindung mittels Stellelementen bewegbar ist, wobei diese Stellelemente extern mit pneumatischer, hydraulischer oder elektrischer Stellenergie versorgt werden.

Vorteilhaft müssen bei dieser Ausgestaltung die Kräfte zur Mitbewegung der Belastungseinrichtungen insgesamt bzw. der entsprechenden Teile (das Getriebe mitsamt der kraft- und/oder formschlüssigen Verbindung) der Belastungseinrichtungen nicht von der Lenkung des zu prüfenden Fahrzeugs selbst aufgebracht werden. Die Ansteuerung der Stellelemente erfolgt bei dieser Ausgestaltung vorteilhaft so, dass die Lenkwinkel elektronisch erfasst werden und die Stellelemente entsprechend angesteuert werden. Die elektronische Erfassung kann entweder mittels Absolutwertgebern oder "online" mittels elektronischen Messeinheiten erfasst werden. Die Messeinheiten können im einfachsten Fall kleine Elektromotoren mit hochgenauen Sinus-Kosinusgebern oder ähnliches sein.

Dadurch wird die Lenkbelastung des zu prüfenden Fahrzeugs realistischer dargestellt als bei einer Ausführungsform, bei der die Kräfte zur Bewegung der entsprechenden Teile der Belastungseinrichtung von der Lenkung selbst aufgebracht werden müssen.

Die Stellelemente können beispielsweise elektromotorisch, pneumatisch oder auch hydraulisch sein.

Weiterhin kann ein zusätzlicher Elektromotor (beispielsweise ein Standardgetriebemotor) zur Simulation von Lenkrückstellmomenten und Lenkkräften während der Prüfung zum Einsatz kommen. Dieser ist sinnvoll an der Lenkungseinheit der Belastungseinheit befestigt und kann über eine zusätzliche Zahnriemenübersetzung in die Belastungseinheit integriert werden. Die Lenkungseinheit der Belastungseinheit kann beispielsweise über Kreuzschlitten und eine Drehbuchse in ihre einzelnen Freiheitsgrade der Kreisbewegung aufgeteilt sein. Die kleinere Übersetzungszahnscheibe dieser Übersetzungseinheit ist auf dem Elektromotor selbst angebracht. Dessen größere Zahnscheibe ist derart unter der Adaptionseinheit angebracht, dass eine Beaufschlagung des Motors mit einem Drehwunsch mit einem bestimmten Drehmoment ein Stellmoment in die Lenkung des Fahrzeugs einleitet.

Sowohl im Hinblick auf Anspruch 1 wie auch auf Anspruch 2 kann eine kraftschlüssige Verbindung beispielsweise mittels einer Klemmkupplung realisiert sein. Eine formschlüssige Verbindung wird durch ein Ineinandergreifen zweier Profile realisiert, wie dies beispielsweise auch bei zwei Zahnrädern der Fall ist. Es ist auch eine Kombination von Kraftschluss und Formschluss möglich. Wesentlich ist, dass die Verbindung so ausgestaltet ist, dass Kräfte, also Momente, sowie Geschwindigkeiten, also Drehzahlen, von der Belastungseinheit definiert auf die Radaufnahme, Radnabe, das Rad oder die Adapterscheibe übertragen werden.

Vorteilhaft wird es dadurch bei beiden Ausgestaltungen nach Anspruch 1 und Anspruch 2 möglich, Prüfvorgänge auch bei Lenkeinschlägen vornehmen zu können, die mit einer starren Belastungseinrichtung sowie mit herkömmlichen Rollenprüfständen nicht darstellbar waren. Vorteilhaft wird es dadurch möglich, eine Vielzahl von zusätzlichen Funktionalitäten zu prüfen wie beispielsweise integrierte Fahrerassistenzsysteme zur Erhöhung der Sicherheit wie der Spurhalteassistent im Fahrzeugverbund und somit auch im Steuergerätegesamtverbund. Bei kleinen Lenkbewegungen bis zu etwa +/-3° Radlenkwinkel kann der Winkelausgleich durch den Einsatz einer homokinetischen Gelenkwelle erfolgen. Wenn die Lenkbewegung so groß wird, dass die Gleichlaufgelenkwelle in ihren bauartbedingten Überlastbereich bzgl. des Knickwinkels gefahren würde, können mit Hilfe der Verschiebung bei der vorliegenden Erfindung auch bei diesen größeren Radlenkwinkeln Fahrzeugfunktionsprüfungen vorgenommen werden.

Es ist dabei nicht notwendig, alle Belastungseinrichtungen so auszugestalten, dass diese während des Prüfvorganges (zumindest in Teilen) bewegbar sind. Üblicher Weise sind bei Fahrzeugen nur die Vorderräder lenkbar. Das bedeutet also, dass bei diesen üblichen Fahrzeugen die Belastungseinrichtungen für die Hinterräder konzipiert werden können, wie dies bereits bekannt ist.

Es ist im Hinblick auf die Ausgestaltung nach Anspruch 2 auch nicht zwingend notwendig, die Belastungseinrichtung vollständig so auszugestalten, dass diese komplett während des Prüfvorganges bewegbar sind. Es kann dabei genügen, wenn lediglich einzelne Teile der Belastungseinrichtung bewegbar sind.

Die Belastungseinrichtung kann beispielsweise auch als Hydraulikmotor ausgestaltet sein. In diesem Fall ist es im Gegensatz zu anderen Antriebsformen, die im Weiteren noch erörtert werden, nicht erforderlich, ein übersetzendes Getriebe oder andere zusätzliche Übersetzungseinheiten vorzusehen. Die Belastungseinrichtung besteht dann nur aus dem einen Teil "Hydraulikmotor" sowie der Verbindung von dem Abtrieb des Hydraulikmotors zur form- und/oder kraftschlüssigen Verbindung mit der Adapterscheibe bzw. der Radnabe, dem Radflansch oder dem Rad. In diesem Fall ist die Belastungseinrichtung insgesamt bewegbar. Der Hydraulikmotor hat gegenüber anderen Antriebsformen den Vorteil der höheren Leistungsdichte sowie der höheren Dynamik bei geringer Masse.

Statt des Hydraulikmotors kann auch der bereits im Zusammenhang mit dem dargestellten Stand der Technik beschriebene Elektromotor mit übersetzendem Zahnriemenantrieb verwendet werden.

Die Belastungseinrichtung kann beispielsweise auch als Elektromotor ausgebildet sein, der über ein Getriebe mit der Adapterscheibe bzw. der Radnabe, dem Radflansch oder dem Rad verbunden ist. Es kann dann genügen, lediglich das Getriebe mit zu bewegen und den Elektromotor während des Prüfvorganges ortsfest auszugestalten. Dies hat den Vorteil, dass die translatorisch zu bewegenden Massen geringer werden. Das Getriebe kann beispielsweise ein Winkelgetriebe sein. Hier müssen dann als Verbindungselement zwischen Motor und Getriebe sinnvoller Weise eine längenveränderliche Kardanwelle oder ähnliches eingesetzt werden, welche die translatorische Relativbewegung zwischen diesen Baugruppen (Motor und Getriebe) unter der Voraussetzung der konstanten und reproduzierbaren Momenten- und Drehzahlübertragung gewährleistet. Diese Ausgestaltung ist hinsichtlich der wesentlichen Merkmale Bestandteil des Anspruchs 2.

Mit der vorliegenden Erfindung wird es möglich, Teilumfänge von Fahrzeugfunktionsprüfungen aus dem mit vielen notwendigen Prüfumfängen stark ausgelasteten Bandende ("end of line") der Produktion in die Montagelinie vorzuverlagern und damit die Prüfumfänge am Bandende zu verringern. Nachdem die entsprechenden Steuergeräte und Aggregate in der Montagelinie montiert sind, kann bereits frühzeitig in der laufenden Produktion eine entsprechende Funktionsprüfung vorgenommen werden.

Im Sinne einer integrierten Prüfung wird es möglich, frühzeitig Prüfungen nicht nur der Fahrzeuglenkung und der Lenkaktuatorik sondern auch aller anderen Antriebsstrangkomponenten und der integrierten Systeme vorzunehmen. Dies gilt insbesondere auch für sogenannte X-by-Wire Systeme.

Durch die verbesserte Prüfung im Zusammenhang mit der Lenkung lassen sich vorteilhaft auch integrierte Prüfumfänge des Gesamtsystems "Fahrzeug" und aller seiner Teilsysteme bis hin zu mechatronisch ausgelegten Antriebsstrangkomponenten eines vollständigen Drive-by-Wire Fahrzeugs sowie bis hin zu zusammenhängenden Funktions- und Funktionalitätenprüfungen der integrierten Systeme (Sicherheits- und Fahrerassistenzsysteme) im Gesamtzusammenhang Fahrzeug durchführen. Bei den Lenkfunktionsprüfungen ist es beispielsweise auch möglich, die Funktionsprüfung mechatronischer Lenksteller und deren Komponenten unter Last vorzunehmen. Diese Funktionsprüfung kann beispielsweise die Energieverbrauchsmessung sowie die Wirkweise der entsprechenden Systeme beinhalten.

Es sind also theoretisch bereits alle diejenigen Prüfungen durchführbar, die nicht in direktem Zusammenhang mit dem fahrdynamischen Einfluss der Reifen selbst auf den späteren Fahrbetrieb des Fahrzeugs stehen. Der Einfluss der Reifen kann beispielsweise in einem Verziehen des Fahrzeugs durch unterschiedliche Reifentypen oder durch verschiedenen Luftdruck der Reifen der getriebenen Achse bei starker Beschleunigung bestehen. Für derartige Prüfungen ist weiterhin ein mit Rädern und Reifen auslieferfertig bestücktes Fahrzeugs notwendig, wobei diese Überprüfungen beispielsweise auf einer Dynamik-Scheitelrolle durchgeführt werden können.

Bei der Ausgestaltung nach Anspruch 3 ist das Getriebe in einer Richtung bewegbar, die der Fahrzeuglängsrichtung entspricht.

Vorteilhaft kann dabei das Nachfolgen der Lenkung (der Lenkbewegung des zu prüfenden Fahrzeugs) durch eine Linearbewegung der bewegten Teile der Belastungseinheit realisiert werden. Die Linearbewegung ist mit vergleichsweise geringem Aufwand realisierbar. Beispielsweise kann ein in Fahrzeuglängsrichtung orientierter Elektromotor eine ebenfalls in Fahrzeuglängsrichtung orientierte Ausgangswelle aufweisen. Diese Ausgangswelle des Elektromotors ist längenveränderlich und die Eingangswelle zu einem Winkelgetriebe, das in Fahrzeuglängsrichtung durch bereits beschriebene Methoden (beispielsweise mechanisch oder elektromotorisch) bewegbar ist. Die Ausgangswelle des Winkelgetriebes, eine homokinetische Querwelle, geht quer zur Fahrzeuglängsrichtung auf die Adapterscheibe bzw. die Radnabe, den Radflansch oder das Rad zu. Indem also bei dieser Ausgestaltung lediglich das Winkelgetriebe mit dessen Ausgangswelle und der mechanischen Ankopplung an das Fahrzeug translatorisch bewegbar sind, ist auch nur ein Teil der Belastungseinrichtung bewegbar.

Bei der Ausgestaltung nach Anspruch 4 ist der Fahrzeugfunktionsprüfstand so ausgestaltet, dass mittels ansteuerbarer Aktoren zumindest eine der den lenkbaren Rädern zugeordneten Belastungseinrichtungen mit Kräften beaufschlagbar ist, so dass von außen auf die lenkbaren Räder, die Radflanschen der lenkbaren Räder, die Radnaben der lenkbaren Räder bzw. daran angebrachten Adapterscheiben simulierte Lenkrückstellmomente bzw. Lenkkräfte aufbringbar sind.

Dies betrifft die Ausgestaltung, bei der Belastungseinheit insgesamt bewegbar ist.

Bei der Ausgestaltung nach Anspruch 5 ist der Fahrzeugfunktionsprüfstand so ausgestaltet, dass mittels wenigstens einem ansteuerbaren Aktuator zumindest eine der den lenkbaren Rädern zugeordneten Belastungseinrichtung mit Kräften beaufschlagbar ist, indem die Adaptionseinheit dieser wenigstens einen Belastungseinrichtung zu den Rädern, den Radflanschen, den Radnaben bzw. daran angebrachten Adapterscheiben mit Kräften beaufschlagbar ist, so dass von außen auf die lenkbaren Räder, die Radflanschen der lenkbaren Räder, die Radnaben der lenkbaren Räder bzw. daran angebrachten Adapterscheiben simulierte Lenkrückstellmomente bzw. Lenkkräfte aufbringbar sind.

Dies betrifft die Ausgestaltung, bei der der Elektromotor während des Prüfvorganges ortsfest zum Prüfstand ist und lediglich das Getriebe mitsamt der kraft- und/oder formschlüssigen Verbindung mittels der Stellelemente bewegbar ist.

Der ansteuerbare Aktuator kann dabei ein separater Stellmotor sein, der mit einer geeigneten Übersetzung und einer geeigneten Anbringung auf die lenkbaren Teile der Belastungseinheit einwirkt. Die aufzubringenden Kräfte können dabei zeitgleich mit dem Prüfablauf über einen übergeordneten Steuerungsrechner "in the Loop" berechnet werden, so dass die entsprechenden Lenkrückstellmomente und Lenkkräfte auf die lenkbaren Räder / Achsen des zu prüfenden Fahrzeugs übertragen werden können.

Sofern bei einer Ausgestaltung mit einem Elektromotor noch mitzubewegende Massen vorgesehen sind zur Erhöhung von Massenträgheitskräften, ist es vorteilhaft, diese Massen mit der Ausgangswelle des Elektromotors auf jeden Fall vor dem Getriebeeingang zu verbinden. Wegen der höheren Drehzahl am Getriebeeingang können dort mit geringeren Massen dieselben auf das Fahrzeugrad reduzierte Massenträgheitskräfte erzeugt werden wie am Getriebeausgang mit größeren Massen. Wegen der Reduzierung der translatorisch zu bewegenden Massen lassen sich damit Prüfungen mit einer höheren Dynamik durchführen. Weiterhin lassen sich somit bestimmte Anlagenkomponenten kompakter und preiswerter auslegen.

Bei den beschriebenen Belastungseinrichtungen ist es vorteilhaft, wenn die Systeme zur Erzeugung von Drehbewegungen und Drehmomenten, wie beispielsweise die beschriebenen Elektromotoren, auch dazu benutzt werden, die form- und/oder kraftschlüssige Verbindung zur Radnabe, den Rädern oder der Adapterscheibe herzustellen. Beispielsweise kann eine form- und/oder kraftschlüssige Verbindung hergestellt werden, indem eine Verbindungskupplung Schraubelemente aufweist, die unter Verwendung spezieller Mehrscheibenkupplungen in die Gewinde des Radflansches geschraubt werden. Mit der beschriebenen Anordnung wird es vorteilhaft möglich, die Ankopplung und Aufnahme des Fahrzeugs im Funktionsprüfstand zu automatisieren. Mit dem beschriebenen Funktionsprüfstand ist es weiterhin möglich, durch die Simulation der Belastungszustände die entsprechenden Funktionsprüfungen stark automatisiert oder sogar vollkommen autonom, also ohne Werker, durchzuführen.

Im Folgenden wird ein Ausführungsbeispiel der Erfindung anhand von Zeichnungen beschrieben.

Es zeigen
- Fig. 1: eine perspektivische Darstellung eines Fahrzeugfunktionsprüfstandes,
- Fig. 2: eine schematische Darstellung des Fahrzeugfunktionsprüfstandes,
- Fig. 3: eine Darstellung einer ersten Lösung nach der vorliegenden Erfindung, bei der ein Winkelgetriebe längsverschieblich ist,
- Fig. 4: eine schematische Detaildarstellung einer Belastungseinheit für die Hinterachse und
- Fig. 5: eine Darstellung einer weiteren Lösung nach der vorliegenden Erfindung, bei der ein Winkelgetriebe längsverschieblich ist.

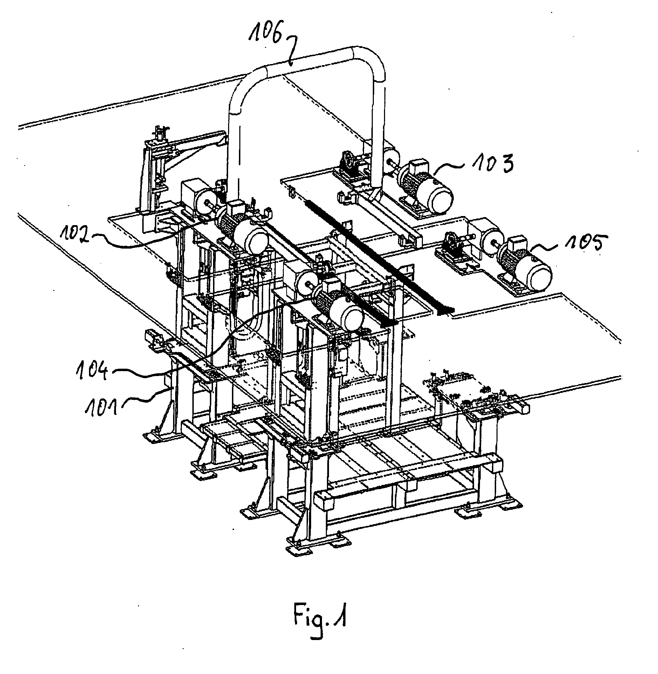

Der in Figur 1 dargestellte Fahrzeugfunktionsprüfstand besteht aus einem Grundaufbau 101, der in der Fahrzeug-Serienproduktion optimal an die Bedingungen am Band angepasst sein kann. Auf diesem Grundaufbau 101 sind vier Belastungseinheiten, je zwei (102, 103) für die Vorderachse und zwei (104, 105) für die Hinterachse so angebracht, dass entweder an der Vorderachse oder an der Hinterachse eine Radstandsanpassung mit Hilfe von aktiven Verschiebeelementen (z.B. Spindelmotoren, aber auch pneumatische oder hydraulische Antriebe etc.) erfolgen kann. Dazu müssen die Belastungseinheiten auf entsprechenden Laufschienen befestigt sein. Alle Belastungseinheiten können zudem zur Spurweitenanpassung und zur Fahrzeugadaption quer zur Fahrzeuglängsrichtung verschoben werden (wieder mittels entsprechender Verschiebeeinheiten). Mit Belastungseinheiten sind hier nicht nur die Elektromotoren gemeint sondern die Gesamtheit der Teile bestehend aus dem jeweiligen Elektromotor sowie den weiteren Teilen, die zur Kraft- bzw. Momentenübertragung vom Elektromotor auf das Rad, den Radflansch bzw. eine Adapterscheibe benötigt werden.

Im weiteren wird der Aufbau eines Prototypen, beispielhaft als eine Möglichkeit des Aufbaus für einen stationären, nicht montageliniengebundenen Prüfstand beschrieben. Stationär bedeutet dabei, dass kein regelmäßiger, taktzeitgebundener Fahrzeugwechsel auf dem Funktionsprüfstand stattfindet. Der in Figur 1 beschriebene, für die Verwendung in der Montagelinie optimierte Grundaufbau stellt sich in stationär betriebenen Prüfständen, auf denen das zu testende Fahrzeug nicht taktzeitgebunden gewechselt werden muss, selbstverständlich anders dar.

Die Belastungseinheiten und deren nachfolgend beschriebener Aufbau können allerdings, mit Ausnahme der Verschiebbarkeit für die Radstandsanpassung und die Spurweiteneinstellung sowie die bereits beschriebene, automatisierbare Adaption an das zu prüfende Fahrzeug unter Serienproduktionsbedingungen identisch sein.

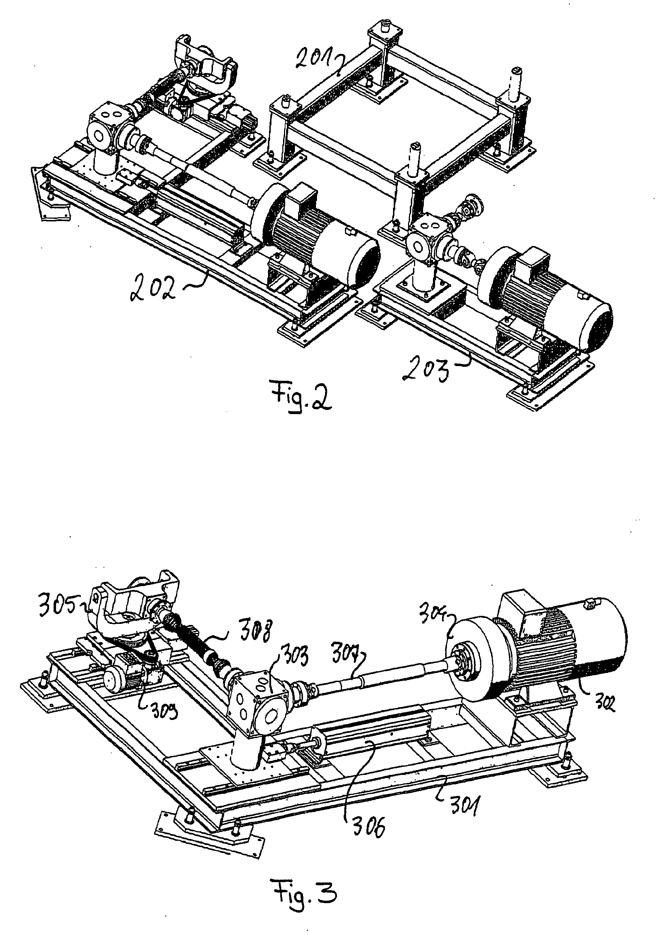

Der mechanische Aufbau des Funktionstesters für den stationären Betrieb ist in Figur 2 perspektivisch dargestellt. Die Belastungseinheiten für die Vorder- und die Hinterachse, welche identisch zu denen für den Serienproduktionsbetrieb sein können und die sich ihrer Funktion entsprechend in einigen Details voneinander unterscheiden, sind im folgenden explizit beschrieben.

In der grundlegenden Ausstattung besteht der Funktionsprüfstand aus einem Grundrahmen 201 zur Befestigung des Prüflings (also des Fahrzeuges) am Boden sowie aus achsweise je zwei Belastungseinheiten (für die Vorderachse mit 202 bezeichnet und für die Hinterachse mit 203 bezeichnet). Weiterhin besteht der Funktionsprüfstand an der Hinterachse aus zwei (nicht in der Figur 2 dargestellten) Stützvorrichtungen für die Hinterachse. Diese Stützvorrichtungen stützen die Hinterachse permanent. An der Vorderachse werden die Räder nach dem Aufbringen und Fixieren des Fahrzeuges auf dem Prüfstand durch externe Hebeeinheiten in Adaptionslage gehoben. Die Belastungseinheiten werden adaptiert und stützen im Folgenden die Räder entsprechend in Prüflage ab. Diese Ausbauform kann alternativ ebenfalls an der Hinterachse Verwendung finden, so dass hier dann keine permanenten Stützvorrichtungen benötigt werden.

Der Grundrahmen ist entsprechend an das Fahrzeug angepasst und an dafür geeigneten Stellen am Fahrzeugunterboden befestigt. Diese Abstützung bedingt eine Fahrzeugbefestigung so, dass kein Teil des Fahrzeuges (auch nicht die Räder, die jedoch nicht zwingend montiert sein müssen) den Boden berührt. Weiterhin wird das Fahrzeug selbst in x-, y- und vor allem in z- Richtung sicher festgehalten, das Fahrzeuggewicht wird abgestützt und die durch den Prüfablauf in das System eingebrachten Kräfte und Kippmomente werden aufgenommen.

Die Haltestempel haben zum einen die Funktion, das Fahrzeug zu tragen. Zum anderen kann damit das Fahrzeug an den Achsschenkeln so abgestützt werden, dass die ungefederten Massen (Räder, Reifen, Bremsenbauteile, etc.) in Prüf- und Einstelllage (z.B. in der sogenannten Konstruktionslage "K0") gehalten werden. Damit ergibt sich eine alternative Ausführungsvariante, die beispielsweise auch geeignet ist für stationäre LKW Prüfstände dieser Art als reine Funktionstester ohne Anspruch auf Leistungsprüfungen des Antriebstranges. Diese Haltestempel können variabel ausgelegt und auch von außen ansteuerbar ausgestaltet sein.

In der Serienproduktion wird der Eintransport des Prüflings durch das in Figur 1 als Rahmen 106 angedeutete sogenannte Gehänge übernommen. Die Funktion der Fixierung und der Abstützung der durch die Prüfeinheiten in den Prüfling eingeleiteten Kräfte übernimmt in der Serienproduktion eine gesonderte, prüfstandsinterne Stütz- und Fixiereinheit, die nach abgeschlossenem Fahrzeugeintransport in den Prüfstand gesondert an den Prüfling / das Fahrzeug herangefahren und adaptiert wird. Nachdem die Belastungseinheiten, die in der Serie die Abstützung der Achsen während des Prüfablaufes auf Prüflage übernehmen, an die Radnabe bzw. das Rad etc. adaptiert worden sind, fahren die Stützeinheiten wieder in Grundstellung und lediglich die prüfkraftaufnehmende und die fahrzeugfixierende Funktion der Stützeinheiten unter dem Fahrzeugchassis bleibt erhalten.

Weiterhin werden im konkreten Beispiel des Prototypen die bei der laufenden "Prüfung" des Prüflings auftretenden Kräfte durch den Grundrahmen abgestützt und das Fahrzeug wird sicher auf seiner Position gehalten.

Im Folgenden werden die Belastungseinheiten für die Vorderachse (102 und 103 in Figur 1 und 202 in Figur 2) sowie die Hinterachse (104 und 105 in Figur 1 und 203 in Figur 2) vorgestellt. Diese Belastungseinheit besteht aus den folgenden Basiskomponenten (siehe Figur 3).

| | |
|---|---|
| 301: | Unterbau / Grundgerüst / Grundgestell der einzelnen Belastungseinheit |
| 302: | Asynchronmaschine (Belastungsmaschine) |
| 303: | Kegelrad- Winkelgetriebe auf Getriebegrundplatte und Träger auf Leichtlaufschienen mit Kugelwagen sowie sogenannten Wegbegrenzern / Anschlägen (auf den Laufschienen) zum Schutz der Wellenkomponente 308 gegen knickwinkelbedingte Überbeanspruchung |
| 304: | Schwungscheibe zur Erhöhung des Massenträgheitsmomentes (z.B. Ø 400 x 100 mm), alternative Lösung für schwerere Fahrzeuge (beispielsweise Personenkraftwagen aus dem Luxussegment): zwei Schwungscheiben, dann je eine an Motorabtriebswelle und an Getriebeeingangswelle angeflanscht |
| 305: | Translatorisch und rotatorisch ausgelegte Adaptionseinheit mittels Kreuzschlitten auf 2x Leichtlaufschienen mit Kugelwagen zur Zerlegung der Drehbewegung in ihre Freiheitsgrade mit Wegbegrenzern / Anschlägen (auf den Laufschienen) |
| 306: | pneumatische Verstelleinheit für Übersetzungsgetriebe (3 Positionen: links - mittig - rechts), z.B. mit 150 mm Verstellweg, sie wird mit Hilfe von Absolutwertgebem an der Adaptionseinheit 305 und einer Computersteuerung angesteuert. Alternativ können sogenannte servohydraulische Verstelleinheiten oder Spindelmotoren eingesetzt werden. Diese weisen dann keine stufenweise sondern eine konstante, stufenlose, "online" geführte Bewegbarkeit der Getriebeeinheit auf. |
| 307: | Längenveränderliche Kardanwelle als Verbindungseinheit zwischen ortsfestem Motor und translatorisch beweglichem Getriebe |
| 308: | Gleichlaufgelenkwelle zur Belastungsübertragung an den Prüfling |
| 309: | elektromotorische Stelleinheit zur Simulation von Lenkrückstellmomenten und Lenkkräften bei Lenkbewegung, entsprechend über Zahnriementrieb übersetzt und sinnvoll an der Adaptionseinheit 5 angebracht, um lediglich in die Drehbewegung einzugreifen |

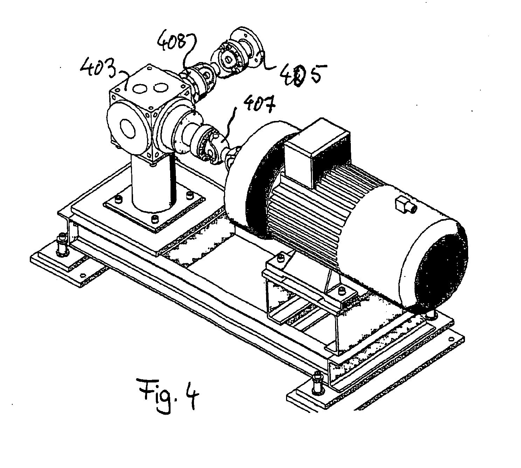

Die Belastungseinheit der nichtlenkbaren Achse (z.B. Hinterachse) besteht grundlegend aus den gleichen Komponenten wie die Belastungseinheit der Vorderachse. Dadurch bedingt, dass hier keine Verstellung durch ein Nachfolgen von Lenkwinkeln notwendig ist, ergeben sich einige konstruktive Vereinfachungen, die nachfolgend im Unterschied zur Darstellung der Figur anhand der Figur 4 erläutert werden.

| | |
|---|---|
| 403: | Das Winkelgetriebe selbst ist identisch zu dem der Vorderachsbelastungseinheit, es entfallen jedoch die Leichtlaufschienen, die Kugelwagen und somit die Verstelleinheit für das Getriebe. |
| 405: | Wie 305 in Figur 3, jedoch nicht lenkbar, also nicht dreh- und verschiebbar gelagert und nicht auf Leichtlaufschienen und Kreuzschlitten. Die Adaptionseinheit muss nicht lenkbar ausgelegt sein, d.h. Leichtlaufschienen und Kugelwagen entfallen. Durch die internen Freiheitsgrade der Adaptionseinheit selbst können Spur und Sturz des Hinterrades ausgeglichen werden. Es muss lediglich die Kraft abstützt werden, welche die Hinterachse in Prüflage hält. Es ist als Alternative auch möglich, eine Adaptionseinheit vorzusehen, die aus der identischen Vorrichtung wie für die Vorderachse besteht. In Figur 4 ist lediglich eine Alternative dargestellt. Die Kraftabstützung der Hinterachse wird bei dieser Alternative von einer separaten, externen Stütze unter dem Fahrzeug übernommen. |
| | Eine Verschiebeeinheit für das Übersetzungsgetriebe entfällt |
| 407: | Die Verbindungswelle zwischen Motor und Getriebe kann kürzer und braucht nicht längenveränderbar ausfallen. |
| 408: | Die Gleichlauf-Gelenkwelle entfällt. Sie wird durch eine Ausgleichseinheit ersetzt. Diese hat lediglich die Aufgabe die geringen Spur- und Sturzwinkel des Hinterrades auszugleichen und das Moment zu übertragen. |

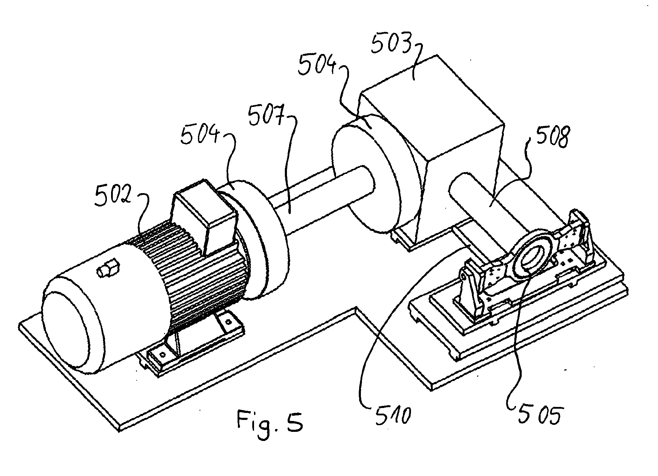

Figur 5 zeigt eine alternative Ausgestaltung der Belastungseinheit für lenkbare Räder, die so ausgestaltet ist, dass diese Lenkwinkeln des Fahrzeugs folgen kann. Es ist ein Elektromotor 502 zu sehen, der in Fahrzeuglängsrichtung orientiert ist ebenso wie dessen Ausgangswelle 507. Diese Ausgangswelle 507 ist gleichzeitig die Eingangswelle eines Winkelgetriebes 503. Die Welle 507 ist längenveränderlich.

Es ist zu sehen, dass auf der Welle 507 vor dem Winkelgetriebe 503 eine Masse 504 angeordnet ist. Vorteilhaft dreht diese Masse 504 mit der (höheren) Winkelgeschwindigkeit des Elektromotors 502, so dass diese Masse zur Erzeugung entsprechender Massenträgheitskräfte insgesamt leichter ausgeführt werden kann.

Die homokinetische Ausgangswelle 508 des Winkelgetriebes 503 ist quer zur Fahrzeuglängsrichtung orientiert und mit einer Adaptionseinheit 505 verbunden.

Es ist zu sehen, dass das Winkelgetriebe 503 mit dessen Ausgangswelle 508 und der Adaptionseinheit 505 auf den in Fahrzeuglängsrichtung orientierten Schienen und bewegbar ist.

In der Darstellung der Figur 5 ist ein mechanischer Mitnehmerstift 510 zu sehen, der von der Grundplatte ausgehend das auf den Schienen und gelagerte Winkelgetriebe 503 mitnimmt. Dabei ist auch zu sehen, dass diese Mitnahme durch Federn gedämpft ist.

Die Fixierung des Fahrzeuges auf den beschriebenen Fahrzeugaufnahmen erfolgt im stationären Fall entweder manuell mittels Verschraubung über entsprechende Bügelklemmen oder andere Sicherungsmöglichkeiten oder über automatische Kipp- oder Klemmelemente beliebiger Art und Funktion.

In der Serienfertigung am Produktionsband transportieren integrierte, bereits vorhandene Trage- und Transporteinrichtung (z.B. das sog. Gehänge) das Fahrzeug in den Prüfstand hinein uns aus ihm heraus.

Der Prüfvorgang / Prüfablauf mit einem erfindungsgemäßen Fahrzeugfunktionsprüfstand kann in der Serienproduktion wie folgt ablaufen:
■ Das Fahrzeug wird auf den Fahrzeugfunktionsprüfstand auf- bzw. eingebracht und wie beschrieben fixiert, nachdem eine Typenerkennung (vorzugsweise kabellos über Funksystemen oder andere kabellose Kommunikationssysteme) erfolgt ist
■ Die verstellbaren Belastungseinheiten werden an den Radstand und die Spurweite des zu prüfenden Fahrzeuges angepasst soweit dies erforderlich ist
■ Die Kommunikation mit den fahrzeuginternen Steuergeräten wird hergestellt (vorzugsweise kabellos über Funksysteme oder andere kabellose Kommunikationssysteme, aber auch mittels eingebrachtem Kabel über Steckverbindung vorstellbar)
■ Anschließend oder zeitgleich dazu erfolgt die Adaption der Belastungsvorrichtung an das Fahrzeug, beispielsweise über Zentrier-Spann-Elemente, die an der Felge, dem Radflansch oder der Radnabe angreifen können. Die Adaption kann sowohl kraft- als auch formschlüssig oder in Kombination dieser beiden Verfahren erfolgen. Außerdem können Verschraubereinheiten oder Klemm-Spann-Backen sowie pro Rad je eine Adapterscheibe (während des Prozesses selber oder zuvor montiert) zur Anwendung kommen.
■ Die Fahrzeugprüfung wird vorgenommen
■ Die Prüfdaten werden gespeichert und entsprechend abgelegt oder weiterverarbeitet, die Fahrzeugsteuergeräte werden parametriert, soweit dies nötig ist
■ Das Fahrzeug wird aus seiner Fixierung gelöst
■ Das Fahrzeug wird aus dem Prüfstandsbereich heraus und z.B. zur weiteren Radmontage (sollte diese noch nicht erfolgt sein) transportiert.

## Patentansprüche

1. Fahrzeugfunktionsprüfstand, bei dem Belastungseinrichtungen (102, 103, 104, 105) kraft- und/oder formschlüssig mit den Rädern, den Radflanschen, den Radnaben bzw. daran angebrachten Adapterscheiben verbindbar sind, wobei Belastungseinrichtungen (102, 103), die lenkbaren Rädern des Fahrzeugs zugeordnet sind, während des Prüfvorganges bewegbar sind derart, dass die den lenkbaren Rädern des Fahrzeugs zugeordneten Belastungseinrichtungen (102, 103) Lenkbewegungen folgen können,
**dadurch gekennzeichnet, dass** die den lenkbaren Rädern des Fahrzeugs zugeordneten Belastungseinrichtungen (102, 103) derart ausgebildet sind, dass sie insgesamt Lenkbewegungen folgen können, indem diese Belastungseinrichtungen (102, 103) mittels Stellelementen (306) bewegbar sind, wobei diese Stellelemente (306) extern mit pneumatischer, hydraulischer oder elektrischer Stellenergie versorgt werden.

2. Fahrzeugfunktionsprüfstand, bei dem Belastungseinrichtungen (102, 103, 104, 105) kraft- und/oder formschlüssig mit den Rädern, den Radflanschen, den Radnaben bzw. daran angebrachten Adapterscheiben verbindbar sind, wobei Belastungseinrichtungen (102, 103), die lenkbaren Rädern des Fahrzeugs zugeordnet sind, während des Prüfvorganges bewegbar sind,
**dadurch gekennzeichnet, dass** die Belastungseinrichtungen (102, 103), die lenkbaren Rädern des Fahrzeugs zugeordnet sind, unterteilt sind in einen ersten Teil, der bezogen auf den Fahrzeugprüfstand ortsfest positioniert ist und einen weiteren Teil, der bewegbar ist, wobei der erste Teil durch einen Elektromotor (302, 502) gebildet wird und der weitere Teil durch ein Getriebe (303, 503), wobei die mechanische Verbindung (307) zwischen dem Elektromotor (302) und dem Getriebe (303) derart ist, dass die translatorische Relativbewegung zwischen dem Elektromotor (302) und dem Getriebe (303) unter der Voraussetzung der konstanten und reproduzierbaren Momenten- und Drehzahlübertragung gewährleistet ist, wobei das Getriebe (303) den Lenkbewegungen folgt, indem das Getriebe (303) mittels Stellelementen (306) bewegbar ist, wobei diese Stellelemente (306) extern mit pneumatischer, hydraulischer oder elektrischer Stellenergie versorgt werden.

3. Fahrzeugfunktionsprüfstand nach Anspruch 2,
**dadurch gekennzeichnet, dass** das Getriebe (303) in einer Richtung bewegbar ist, die der Fahrzeuglängsrichtung entspricht.

4. Fahrzeugfunktionsprüfstand nach Anspruch 1,
**dadurch gekennzeichnet, dass** mittels wenigstens eines ansteuerbaren Aktuators (309) zumindest eine der den lenkbaren Rädern zugeordneten Belastungseinrichtungen mit Kräften beaufschlagbar ist, so dass von außen auf die lenkbaren Räder, die Radflanschen der lenkbaren Räder, die Radnaben der lenkbaren Räder bzw. daran angebrachten Adapterscheiben simulierte Lenkrückstellmomente bzw. Lenkkräfte aufbringbar sind.

5. Fahrzeugfunktionsprüfstand nach einem der Ansprüche 2 oder 3,
**dadurch gekennzeichnet, dass** mittels wenigstens eines ansteuerbaren Aktuators (309) zumindest eine der den lenkbaren Rädern zugeordneten Belastungseinrichtung mit Kräften beaufschlagbar ist, indem eine Adaptionseinheit (305) dieser wenigstens einen Belastungseinrichtung zu den Rädern, den Radflanschen, den Radnaben bzw. daran angebrachten Adapterscheiben mit Kräften beaufschlagbar ist, so dass von außen auf die lenkbaren Räder, die Radflansche der lenkbaren Räder, die Radnaben der lenkbaren Räder bzw. daran angebrachten Adapterscheiben simulierte Lenkrückstellmomente bzw. Lenkkräfte aufbringbar sind.

## Claims

1. Vehicle test bench featuring loading devices (102, 103, 104, 105) connectable in non-positive and/or positive manner with the wheels, wheel flanges, wheel hubs or adapter discs attached thereto, the loading devices (102, 103) assigned to the steerable vehicle wheels being movable during the testing operation in such manner that the loading devices (102, 103) assigned to the steerable vehicle wheels are able to follow steering movements,
**characterised in that** the loading devices (102, 103) assigned to the steerable vehicle wheels are engineered in such a way that they are collectively able to follow steering movements by virtue of the fact that these loading devices (102, 103) can be moved by control elements (306) powered externally with pneumatic, hydraulic or electrical actuating energy.

2. Vehicle test bench featuring loading devices (102, 103, 104, 105) connectable in non-positive and/or positive manner with the wheels, wheel flanges, wheel hubs or adapter discs attached thereto, the loading devices (102, 103) assigned to the steerable vehicle wheels being movable during the testing operation,
**characterised in that** the loading devices (102, 103) assigned to the steerable vehicle wheels are sub-divided into a first component which, relative to the vehicle test bench, is fixed in position, and a further, movable component, said first component taking the form of an electric motor (302, 502) and the other component the form of a gear box (303, 503), the mechanical connection (307) between the electric motor (302) and the gear box (303) being of such nature as to guarantee the translational relative motion between the electric motor (302) and the gear box (303) under conditions of constant and reproducible torque transmission and rotational speed transmission, the gear box (303) following the steering movements by virtue of its being movable by means of control elements (306) powered externally by pneumatic, hydraulic or electrical actuating energy.

3. Vehicle test bench according to claim 2,
**characterised in that** the gear box (303) is movable in a direction corresponding to the vehicle's longitudinal axis.

4. Vehicle test bench according to claim 1,
**characterised in that**, by means of at least one selectable actuator (309),
forces can be applied to at least one of the loading devices assigned to the steerable wheels, thus allowing the external application of simulated self-centring torque or steering forces to the steerable wheels, the wheel flanges of the steerable wheels, the wheel hubs of the steerable wheels or to adapter discs attached thereto.

5. Vehicle test bench according to one of claims 2 or 3,
**characterised in that**, by means of at least one selectable actuator (309), forces can be applied to at least one of the loading devices assigned to the steerable wheels by applying forces to an adapter unit (305) connecting this at least one loading device to the wheels, wheel flanges, wheel hubs or adapter discs attached thereto, thus allowing the external application of simulated self-centring torque or steering forces to the steerable wheels, the wheel flanges of the steerable wheels, the wheel hubs of the steerable wheels or to adapter dics attached thereto.

## Revendications

1. Banc d'essais fonctionnel pour véhicules, dans lequel des dispositifs de chargement (102, 103, 104, 105) peuvent être reliés par force et/ou par emboîtement respectivement aux roues, aux brides de roue, aux moyeux de roue ou à des disques de raccord disposés sur ceux-ci, des dispositifs de chargement (102, 103) qui sont associés aux roues directrices du véhicule étant mobiles durant le processus de contrôle de telle sorte que les dispositifs de chargement (102, 103) associés aux roues directrices du véhicule peuvent suivre les mouvements de braquage, **caractérisé en ce que** les dispositifs de chargement (102, 103) associés aux roues directrices du véhicule sont formés de telle sorte qu'ils peuvent dans l'ensemble suivre les mouvements de braquage du fait que ces dispositifs de chargement (102, 103) sont mobiles au moyen d'éléments de réglage (306), ces éléments de réglage (306) étant alimentés de l'extérieur avec une énergie de réglage pneumatique, hydraulique ou électrique.

2. Banc d'essais fonctionnel pour véhicules, dans lequel des dispositifs de chargement (102, 103, 104, 105) peuvent être reliés par force et/ou par emboîtement respectivement aux roues, aux brides de roue, aux moyeux de roue ou à des disques de raccord disposés sur ceux-ci, des dispositifs de chargement (102, 103) qui sont associés aux roues directrices du véhicule étant mobiles durant le processus de contrôle, **caractérisé en ce que** les dispositifs de chargement (102, 103) qui sont associés aux roues directrices du véhicule sont divisés en une première partie qui est positionnée de façon fixe par rapport au banc d'essai fonctionnel pour véhicules et en une autre partie qui est mobile, la première partie étant formée par un moteur électrique (302, 502) et la deuxième partie par une transmission (303, 503), la liaison mécanique (307) entre le moteur électrique (302) et la transmission (303) étant telle que le mouvement de translation relatif entre le moteur électrique (302) et la transmission (303) est assuré en maintenant constante et reproductible la transmission du moment et de la vitesse de rotation, la transmission (303) suivant le mouvement de braquage du fait que la transmission (303) est mobile au moyen d'éléments de réglage (306), ces éléments de réglage (306) étant alimentés de l'extérieur avec une énergie de réglage pneumatique, hydraulique ou électrique.

3. Banc d'essais fonctionnel pour véhicules selon la revendication 2, **caractérisé en ce que** la transmission (303) peut être déplacée dans une direction correspondant à la direction longitudinale du véhicule.

4. Banc d'essais fonctionnel pour véhicules selon la revendication 1, **caractérisé en ce qu'**au moyen d'au moins un actuateur (309) pouvant être commandé, au moins un des dispositifs de chargement associé aux roues directrices peut être soumis à des forces de telle sorte que des moments de rappel de direction ou des forces de direction simulés peuvent être appliqués de l'extérieur respectivement sur les roues directrices, les brides de roue des roues directrices, les moyeux de roue des roues directrices ou des disques de raccord disposés sur ceux-ci.

5. Banc d'essais fonctionnel pour véhicules selon l'une des revendications 2 ou 3, **caractérisé en ce que** au moyen d'au moins un actuateur pouvant être commandé (309), au moins un des dispositifs de chargement associé aux roues directrices peut être soumis à des forces du fait qu'une unité de raccord (305) de ce au moins un dispositif de chargement peut exercer des forces sur les roues, les brides de roue, les moyeux de roue ou des disques de raccord disposés sur ceux-ci, de telle sorte que des moments de rappel de direction ou des forces de direction simulés peuvent être appliqués de l'extérieur respectivement sur les roues directrices, les brides de roue des roues directrices, les moyeux de roue des roues directrices ou des disques de raccord disposés sur ceux-ci
